# EUROPÄISCHE PATENTSCHRIFT

(11) **EP 1 519 056 B1**
(45) Veröffentlichungstag und Bekanntmachung des Hinweises auf die Patenterteilung: **20.10.2010**
(21) Anmeldenummer: 04020580.9
(22) Anmeldetag: 31.08.2004
(51) Int. Cl.: F16B 5/02

(54) **Einrichtung zur Verbindung mindestens zweier Maschinenteile an einem Schlagwerk**
Mechanism for the connection of at least two machine parts on an impact tool
Dispositif pour relier deux membres mécaniques à un outil d'impact

(30) Priorität: 27.09.2003 DE 10344987
(43) Veröffentlichungstag der Anmeldung: 30.03.2005
(73) Patentinhaber: Atlas Copco Construction Tools GmbH, 45143 Essen (DE)
(72) Erfinder: Kaulbach, Romuald, 46242 Bottrop (DE); Fritz, Karlheinz, 45449 Sprockhövel (DE)
(74) Vertreter: Vomberg, Friedhelm

(56) Entgegenhaltungen:
- DE-A- 2 804 181
- DE-A- 3 405 756
- US-A- 1 777 305
- US-A- 3 008 368
- US-A- 4 941 769
- PATENT ABSTRACTS OF JAPAN Bd. 0081, Nr. 28 (M-302), 14. Juni 1984 (1984-06-14) & JP 59 029833 A (HONDA GIKEN KOGYO KK), 17. Februar 1984 (1984-02-17)

## Beschreibung

Die Erfindung betrifft eine Verbindungseinrichtung an einem Schlagwerk mit mindestens zwei aneinanderliegenden Maschinenteilen, die jeweils eine Bohrung aufweisen, mit einem Spannelement, insbesondere ein Spannbolzen oder eine Spannschraube, das bis auf einen Schraubenkopf vollständig in der Bohrung aufgenommen ist und das an mindestens einem Ende mit einem Maschinenteil über eine Gewindeverbindung verschraubt ist sowie mit mindestens einem als Bund ausgebildeten Halte- oder Stützteil aus schwingungsdämpfendem Material, das zwischen den Enden des Spannelements angeordnet ist und das unter Druckspannung in den Ringbereich zwischen der Bohrung und dem Spannelementaußenmantel anliegt.

Eine solche Einrichtung wird beispielsweise in der DE 30 46 013 A1 beschrieben. Maschinenteile an Schlagwerken sowie die Spannbolzen oder auch Spannschrauben, die zu deren Befestigung verwendet werden, sind erheblichen Stößen, Schlägen und sonstigen Erschütterungen ausgesetzt, die dazu führen können, dass aufgrund der erzeugten Schwingungen die Gefahr besteht, dass sich die Spannelemente lockern oder schlimmsten Falls brechen. Schädigungen der Maschinenteile sind hierbei nicht auszuschließen. In der DE 30 46 013 A1 wird daher vorgeschlagen, dass in dem zwischen dem Spannelement und der durchgehenden Bohrung festgelegten Zwischenraum ein Halte- oder Stützteil aus elastischem Material angeordnet wird, das eine Dicke hat, die etwas größer ist als die Querabmessung des Zwischenraumes, so dass der betreffende Bund unter Druckspannung angeordnet ist und hierdurch Schwingungen vermieden werden sollen. Als Ort der Anbringung wird in der genannten Druckschrift im Wesentlichen die Mitte des Spannelements gewählt. Abgesehen davon, dass diese Lage der Anbringung des Bundes nicht in allen Fällen optimal ist, besteht der Nachteil, dass das Spannelement selbst nur schwer montiert werden kann. Da der elastische Bund beim Einbringen des Spannelements über einen Weg geführt werden muss, welcher der halben Bolzen- oder Schraubenlänge entspricht, ist auch aufgrund der zu überwindenden Haft- und Gleitreibungskräfte sowie der beim Durchführen des Bundes über einen Weg in der Bohrung entstehenden Scherspannungen eine Beschädigung des elastischen Bundes nicht auszuschließen.

Es ist daher Aufgabe der vorliegenden Erfindung, die eingangs genannte Einrichtung dahingehend zu verbessern, dass die Montage des Spannelements erleichtert wird und dennoch keine Abstriche hinsichtlich der gewünschten Schwingungsdämpfung in Kauf zu nehmen sind.

Diese Aufgabe wird durch die Einrichtung nach Anspruch 1 gelöst. Erfindungsgemäß weist der Bund in längsaxialer Richtung mindestens einen Außenmantelbereich auf, der zur Bohrung beabstandet ist. Der Vorteil dieser Ausbildung besteht darin, dass in hinreichendem Maße eine Schwingungsdämpfung gewährleistet ist und im Übrigen die beabstandeten Bereiche die Einführung des Spannelements erleichtern. Zudem können etwaige Form- und Lagetoleranzen von Bund und/oder Bohrung ausgeglichen werden.

Weiterhin besitzt der Bund mehrere beabstandete ringförmige, wendelförmige oder längsaxial verlaufende Vorsprünge, deren Außenmantelflächen unter Druckspannung am Bohrungsmantel anliegen. Solche rippen- oder wulstartigen nebeneinander angeordneten Vorsprünge hindern bzw. dämpfen auftretende Querschwingungen in praktisch gleichem Maße wie zylinderförmige Hohlprofile, wie sie nach dem Stand der Technik grundsätzlich bekannt sind, haben jedoch den entscheidenden Vorteil, dass zum Einführen der Spannstange erheblich geringere Kräfte aufgewendet werden müssen.

Nach einer alternativen Ausgestaltung der erfindungsgemäßen Einrichtung besitzt der Bund einen zumindest teilweise konisch ausgebildeten Außenmantel, der im entspannten Zustand nur in einem längsaxialen Teilbereich ein Übermaß gegenüber der Bohrung aufweist. Die Konizität ist hierbei derart gewählt, dass der durchmesserkleinere Bundteil beim Einführen des Spannelements in die betreffende Bohrung vorangeführt wird.

Die Vorsprünge besitzen gegenüber dem Bohrungsdurchmesser ein Übermaß von 0,2 mm bis 1,5 mm, vorzugsweise von 0,5 mm bis 1 mm, wobei die den Vorsprüngen benachbarten Mantelflächen des Bundes im Außendurchmesser 0,2mm bis 1,5mm, vorzugsweise 0,5mm bis 1 mm, kleiner als der Bohrungsdurchmesser sind.

Sowohl bei den Bunden mit mehreren beabstandeten Vorsprüngen als auch den Bunden mit konisch ausgebildetem Außenmantel hat sich eine Breite (d.h. Wandstärke) von 3mm bis 8mm, vorzugsweise 4mm bis 6mm als optimal erwiesen.

Nach einer weiteren Ausgestaltung der Erfindung wird die axiale Lage des Bundes an dem Spannelement und/oder ein unterschiedlicher Bohrungsdurchmesser derart gewählt, dass bei einer Montage der Spannelements die durch den Bund erzeugte Druckspannung erst wirksam wird, wenn das Spannelement im Gewinde der Aufnahmebohrung eines Maschinenteils eingreift. Bei dieser Ausführungsform kann das Spannelement mitsamt dem Bund zunächst zumindest weitgehend reibungsfrei in die Bohrung eingeführt werden. Erst wenn das Gewinde des Spannelements bei Drehung in ein entsprechendes Aufnahmegewinde, wie eine Gewindesacklochbohrung oder eine im oder am Maschinenteil angeordnete Mutter, greift, wird die zur Schwingungsdämpfung erforderlicher Druckspannung in den betreffenden Bundteilen aufgebaut.

Der erfindungsgemäß ausgestaltete Bund muss nicht zwingend mittig bezogen auf die Längsachse des Spannelements angeordnet sein. Je nach Schwingungsverhältnissen haben sich Anordnungen des Bundes in längsaxialer Richtung in einem Abstand von einem Spannelementende als optimal erwiesen, die 20% bis 80%, vorzugsweise 30% bis 70%, der Gesamtlänge des Spannelements entsprechen. Wird das Spannelement mit einem weiteren Bund ausgestattet, sollte der Abstand der Bunde untereinander etwa dem Abstand der Bunde zum jeweiligen Spannelementende entsprechen.

Weiterhin weisen die Vorsprünge oder die unter Druckspannung in der Bohrung anliegenden Teilflächen des Bundes ein im Querschnitt rundes oder mehreckiges Außenmantelprofil auf. Die Haft- und Gleitreibungskräfte am Bund beim Einführen des Spannelements werden dadurch verringert, das Einführen somit weiter erleichtert und der Bund vor Beschädigungen geschützt.

Wie grundsätzlich nach dem Stand der Technik bekannt, besitzt das Spannelement vorzugsweise an einem Ende ein Außengewinde und an ihrem gegenüberliegenden Ende einen Schraubenkopf, der beispielsweise einen Außen- oder Innensechskant zum Ansetzen eines Schraubwerkzeuges, beispielsweise eines Schraubendrehers für Innensechskantschrauben, aufweist.

Wie vorstehend bereits angesprochen, wird ein Bund mit einem keilförmig ausgebildeten Mantel auf dem Spannelement derart angeordnet, dass der Mantel-Durchmesser mit wachsendem Abstand von dem mit Gewinde ausgestatteten Spannelementende größer wird.

Je nach Spannelementdurchmesser sollte die Länge des Bundes (d. h. die längsaxiale Ausdehnung) größer oder kleiner gewählt werden, wobei sich als Idealmaß eine Bundlänge erwiesen hat, die 1 bis 4mal, vorzugsweise 1,5 bis 2mal, so groß wie der Spannelementdurchmesser ist.

Nach einer weiteren Ausgestaltung der Erfindung ist an dem Spannelement ein weiterer Bund vorgesehen, der im verspannten Zustand der Maschinenteile vorzugsweise 5mm bis 30mm zur Gewindeverbindung zwischen einem Maschinenteil und dem (mit einem Außengewinde versehenen) Spannelementende beabstandet ist. Gegebenenfalls kann zusätzlich in einem Abstand von vorzugsweise 5mm bis 30mm zum Bolzen- oder Schraubenkopf ein zusätzlicher Bund angeordnet sein, so dass das Spannelement beispielsweise drei Bunde besitzt. Der mittlere Bund sowie der der Gewindeverbindung benachbarte Bund bestehen vorzugsweise aus Polyurethan, insbesondere mit einer Härte von 85 bis 95 Shore A.

Zur Verringerung der Kerbwirkung und damit zur Erhöhung der Dauerhaltbarkeit der Gewindeverbindung werden die Gewinde als Rundgewinde ausgebildet.

Nach einer weiteren Ausgestaltung der Erfindung nimmt der Durchmesser der Bohrung der miteinander verbundenen Maschinenteile sprungweise in Einführrichtung des Spannelements ab, wobei die Abnahme vorzugsweise im Bereich einer Trennfuge liegt, in dessen Bereich auch ein Bund angeordnet ist, so dass die verbundenen Maschinenteile zusätzlich gegen Verdrehen gesichert werden.

Als vorteilhaft hat es sich in diesem Zusammenhang auch erwiesen, einen Gewindeeinsatz in Form einer Wendel aus rhombischem Draht in das Aufnahmegewinde einzusetzen, welches eine einwandfreie Flankenanlage und somit eine gleichmäßige Last- und Spannungsverteilung bewirkt. Der wendelförmige Gewindeeinsatz kann insbesondere aus einem Draht mit einem weitgehend rhombischen Querschnitt bestehen, d.h. dessen Kanten können verrundet sein. Die Kanten der Querschnittsfläche können auch unterschiedliche Längen aufweisen; ferner können um die aufeinander gleitenden Gewindeflächen vor vorzeitigem Verschleiß zu schützen, die Gewindeflächen beschichtet werden, vorzugsweise mit einer Aluminium- oder Silberlegierung.

Ausführungsbeispiele der vorliegenden Erfindung sind in den Zeichnungen dargestellt. Es zeigen:
- Fig. 1: eine Prinzipansicht mehrerer Maschinenteile eines Schlagwerkes, die mit einer Spannschraube miteinander verbunden sind und
- Fig. 2-4: jeweils Detailansichten unterschiedlicher Bundausgestaltungen auf einer Spannschraube.
- Fig. 5-6: jeweils Detailansichten einer Ausführung des Spannelements mit Unterlegscheibe

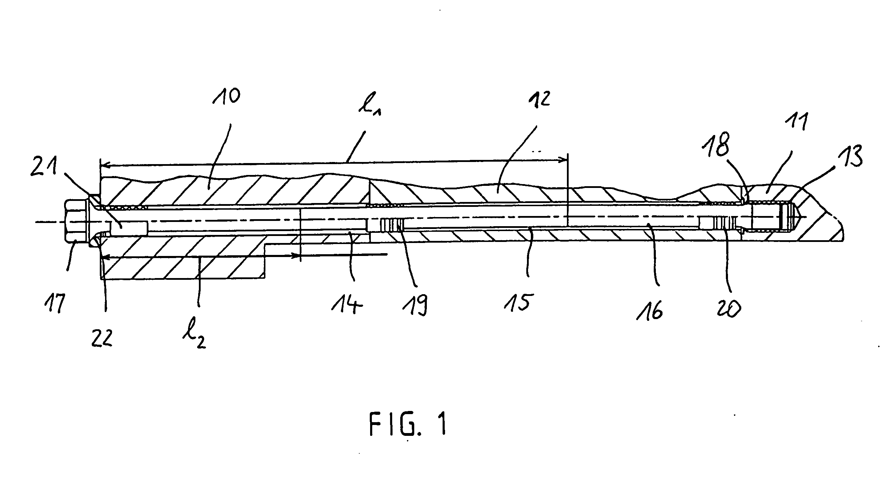

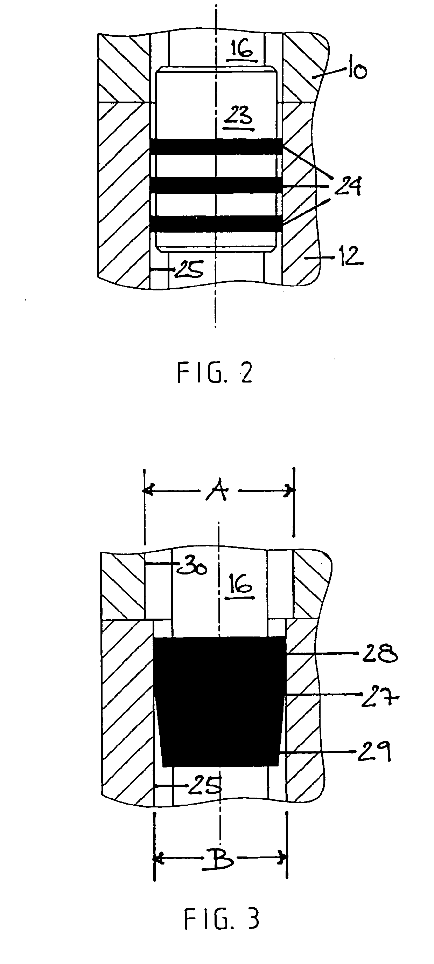

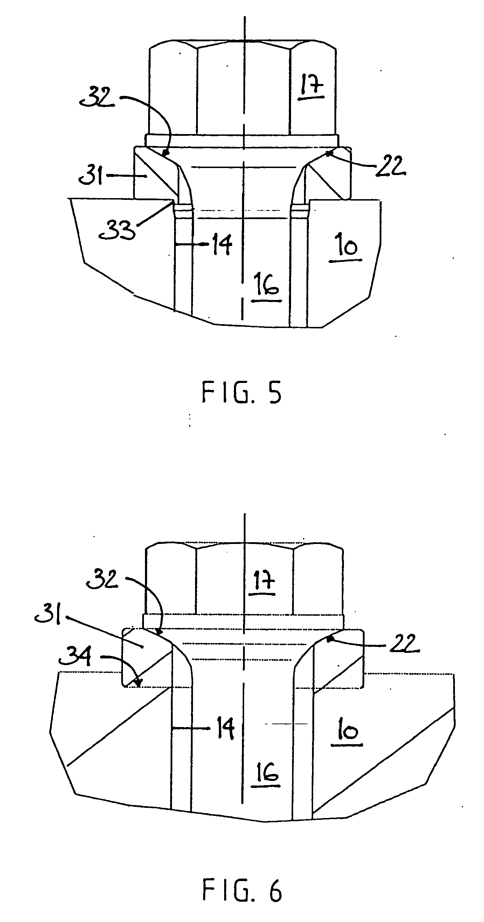

In Fig. 1 sind ein oberes Maschinenteil 10, ein Zwischenmaschinenteil 12 und ein unteres Maschinenteil 11 mit einer Sacklochgewindebohrung 13 dargestellt. Die Maschinenteile 10 und 12 besitzen jeweils Bohrungen 14 und 15, deren Längsachse mit der Längsachse der Gewindebohrung 13 fluchtet. In den Bohrungen 14, 15 angeordnet sowie in das Gewinde 13 eingeschraubt ist eine Spannschraube 16, die an ihrem einen Ende einen Schraubenkopf 17 und am gegenüberliegenden Ende ein Außengewinde 18 besitzt. Zur Schwingungsdämpfung sind ein Bund 19 im mittleren Bereich, ein weiterer Bund 20 im unteren Bereich und ein zusätzlicher Bund 21 im oberen Bereich vorgesehen. Zumindest der mittlere Bund 19 besitzt Teilbereiche, die gemäß Fig. 2 bis 4 ausgestaltet sein können und die im entspannten Zustand ein Übermaß gegenüber dem Durchmesser der betreffenden Bohrung (hier 15) aufweisen. Die Bunde 20 und 21 dienen hauptsächlich der Zentrierung der Spannschraube 16, wobei fakultativ der Bund 21 dann entfallen kann, wenn die schraubenkopfseitige Zentrierung mittels einer Unterlegscheibe gewährleistet ist. Weiterhin wird die Zentrierung der Spannschraube 16 durch Schrägen 22 sowie etwaigen korrespondierenden Schrägflächen an der Unterlegscheibe gemäß Fig. 5 und/oder am Maschinenteil 10 gewährleistet. Der Bund 21 ist als hohlzylindrischer Ringbund mit zylinderförmiger Außenmantelfläche ausgebildet. Die Formgestaltung der Bunde 19 und 20 wird im Ausführungsbeispiel entsprechend den Ausführungsformen nach Fig. 2 bis 4 gewählt. Vorzugsweise wird der Bund 19 in längsaxialer Richtung derart platziert, dass die Druckbelastung in Teilbereichen des Bundes erst dann aufgebracht wird, wenn das vordere Ende des Gewindes 18 der Spannschraube 16 im Gewinde 13 der Sacklochgewindebohrung in Eingriff kommt. Der Bund 19 wird zwischen den durch I₁ und I₂ gekennzeichneten Abständen angeordnet, wobei I₁ etwa 80% der gesamten Spannschraubenlänge und I₂ etwa 20% der Spannschraubengesamtlänge betragen.

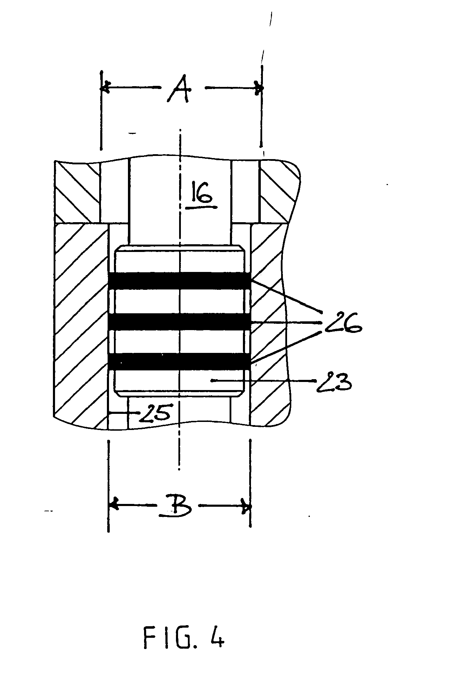

In einer ersten, in Fig. 2 dargestellten, Ausführungsform besitzt der Bund 19 (oder 20) ein hohlzylinderförmiges Profil 23 mit ringförmigen Vorsprüngen 24, deren Außenmantelflächen unter Druckspannung am Bohrungsmantel 25 anliegen. Die Vorsprünge können, wie in Fig. 2 dargestellt, gleiche oder unterschiedliche längsaxiale Erstreckungen aufweisen, wobei deren Profil im Wesentlichen regelmäßig entsprechend Fig. 2 und 4 mit Vorsprüngen 26 ausgebildet ist. Wesentlich ist jedenfalls, dass die Bunde nicht wie nach dem Stand der Technik hohlzylinderförmig ausgebildet sind, sondern mindestens einen Außenmantelbereich aufweisen, der zur Bohrung 25 beabstandet ist.

Eine weitere Ausführungsform zeigt Fig. 3 mit einem Bund 27, der einen konisch ausgebildeten Außenmantel aufweist, der nur in dem mit Bezugszeichen 28 gekennzeichneten Bereich unter Druckspannung in der Bohrung einliegt, jedoch in darunter liegenden Bereichen 29 zur Bohrungswand 25 beabstandet ist. Diese Ausführungsform hat den Vorteil, dass der untere Bereich 29 leicht in die vorhandene obere Bohrung eingeführt werden kann. Am Beispiel der Fig. 3 wird deutlich, dass die Durch messer A und B der Bereiche 30 und 25 differieren, so dass der Kunststoffbund 27 auch mit seinem größten Durchmesser druckspannungsfrei in der Bohrung 30 mit dem Durchmesser A (von oben nach unten) durchgeführt werden kann. Der darunter liegende Durchmesser B der Bohrung 25 ist sowohl kleiner als der Durchmesser A der Bohrung 30 als auch um 0,2mm bis 1,5mm kleiner als der größte Durchmesser des Bereiches 28 im entspannten Zustand. Idealer Weise greift zunächst das Außengewinde 18 der Spannschraube im ersten Gewindegang der Sacklochgewindebohrung 13, wobei durch Drehbetätigung der Spannschraube 16 über den Schraubenkopf 17 beim weiteren Eindrehen in die Sacklochgewindebohrung die Druckspannung aufgebaut wird.

Zusätzlich kann im Bereich 28 der Kunststoffbund ein Außenprofil aufweisen, das gleichzeitig als Verdrehsicherung dient, so dass einem Lockern der Spannschraube zusätzlich entgegengewirkt wird. Entsprechendes gilt für die Vorsprünge 24 und 26, die alternativ auch wendelförmig oder als längsaxiale Rippen ausgebildet sein können.

Des Weiteren zeigen Fig. 5 und 6 jeweils Ausführungsbeispiele einer Spannschraube 16 mit Unterlegscheibe 31. Die Unterlegscheibe 31 übernimmt zusammen mit einem Bund 21 oder an Stelle eines Bundes 21 die Zentrierung der Spannschraube beim Einführen. Sie weist an ihrer Innenmantelfläche zum Spannschraubenkopf hin einen konischen Bereich 32 zur Aufnahme des Spannschraubenkopfes 17 auf, dessen Konuswinkel gleich groß dem Winkel einer konischen Außenmantelfläche 22 am unteren Ende des Spannschraubenkopfes 17 ist.
Wie in Fig. 5 dargestellt kann zudem die Unterlegscheibe 31 auf der dem Maschinenteil 10 zugewandten Seite Ansätze 33 aufweisen, die in die Bohrung 14 des Maschinenteils greifen und die Zentrierung der Unterlegscheibe im Maschinenteil übernehmen.

In einer weiteren Ausführungsform entsprechend Fig. 6 wird die Zentrierung der Unterlegscheibe 31 dadurch erreicht, dass das Maschinenteil 10 an der Bohrung 14 eine Ausnehmung 34 aufweist deren Innenradius dem Außenradius der Unterlegscheibe entspricht und die Unterlegscheibe somit weitgehend spielfrei in die Ausnehmung 34 eingelassen werden kann. Letzteres kann aber auch dadurch bewirkt werden, dass die Außenmantelfläche der Unterlegscheibe 31 zum Maschinenteil 10 hin ebenfalls einen konischen Bereich aufweist, mit dem die Unterlegscheibe an korrespondierenden Schrägflächen mit gleichem Konuswinkel am Maschinenteil anliegt.

An Stelle des Sacklochgewindes 13 kann auch eine in einer Bohrung eingelegte Gewindemutter oder an einem Bauteil anliegende Gewindemutter verwendet werden. Die Innengewinde können zusätzlich beschichtet sein. Die Längen und Lagen der Spannschraubengewinde und Aufnahmegewinde sind so gewählt, dass das Aufnahmegewinde zu beiden Seiten über das Spannschraubengewinde herausragt.

Die Lage des Kunststoffbundes 19 kann mittig gewählt werden oder um 30% bezogen auf die Gesamtlänge außerhalb der Spannschraubenmitte. Die Bunde 20 und 21 sind vorzugsweise jeweils 5mm bis 30mm vom Schraubenkopf 17 bzw. vom Außengewinde 18 angeordnet. In der in Fig. 1 dargestellten Ausführungsform wirken sämtliche Bunde 19, 20 und 21 sowohl gegen ein Losdrehen als auch zur Begrenzung von Querschwingungen der Spannschraube.

Das Spannschraubengewinde 18 wird gerollt und besteht aus einem Rundgewinde.

## Patentansprüche

1. Verbindungseinrichtung an einem Schlagwerk mit mindestens zwei aneinanderliegenden Maschinenteilen (10, 11, 12), die jeweils eine Bohrung (14, 15) aufweisen, mit einem Spannelement (16), insbesondere ein Spannbolzen oder eine Spannschraube, das bis auf einen Schraubenkopf (17) vollständig in der Bohrung (14, 15) aufgenommen ist, das an einem Ende mit einem Maschinenteil (11) über eine Gewindeverbindung (13, 18) verschraubt ist sowie mit mindestens einem als Bund (19) ausgebildeten Halte- oder Stützteil aus schwingungsdämpfendem Material, das zwischen den Enden des Spannelementes angeordnet ist und das unter Druckspannung in dem Ringbereich zwischen der Bohrung (15) und dem Spannelementaußenmantel anliegt,
**dadurch gekennzeichnet, dass**
der Bund (19, 27) in längsaxialer Richtung mindestens einen Außenmantelbereich (23, 29) aufweist, der zur Bohrung beabstandet ist, wobei der Bund entweder mehrere beabstandete ringförmige, wendelförmige oder längsaxial verlaufende Vorsprünge (24, 26) aufweist, deren Außenmantelflächen unter Druckspannung am Bohrungsmantel (25) anliegen oder der Bund (27) einen zumindest teilweise konisch ausgebildeten Außenmantel (28, 29) aufweist, der in entspanntem Zustand nur in einem längsaxialen Teilbereich (28) ein Übermaß gegenüber der Bohrung (25) aufweist.

2. Verbindungseinrichtung nach Anspruch 1, **dadurch gekennzeichnet, dass** die Vorsprünge gegenüber dem Bohrungsdurchmesser ein Übermaß von 0,2 mm bis 1,5 mm, vorzugsweise von 0,5 mm bis 1 mm, besitzen und dass den Vorsprüngen (24, 26) benachbarte Mantelflächen des Bundes im Außendurchmesser 0,2 mm bis 1,5 mm, vorzugsweise 0,5 mm bis 1 mm, kleiner als der Bohrungsdurchmesser sind.

3. Verbindungseinrichtung nach Anspruch 1, **dadurch gekennzeichnet, dass** der Bund (19) eine Breite (d.h. Wandstärke) von 3 mm bis 8 mm, vorzugsweise von 4 mm bis 6 mm, besitzt.

4. Verbindungseinrichtung nach einem der Ansprüche 1 bis 3, **dadurch gekennzeichnet, dass** durch die axiale Lage des Bundes an dem Spannelement (16) und/oder durch unterschiedliche Bohrungsdurchmesser bei einer Montage des Spannelements (16) die durch den Bund erzeugte Druckspannung erst wirksam wird, wenn das Spannelement (16) im Gewinde (13) der Aufnahmebohrung eines Maschinenteils (11) eingreift.

5. Verbindungseinrichtung nach einem der Ansprüche 2 bis 4, **dadurch gekennzeichnet, dass** die Vorsprünge (24, 26) oder die unter Druckspannung in der Bohrung anliegende Teilfläche (28) des Bundes (19, 27) ein im Querschnitt rundes oder mehreckiges Außenmantelprofil aufweisen und/oder dass das Spannelement (16) an einem Ende ein Außengewinde (18) und am gegenüberliegenden Ende einen Schraubenkopf (17) aufweist.

6. Verbindungseinrichtung nach einem der Ansprüche 3 bis 5, **dadurch gekennzeichnet, dass** der Bund (27) in längsaxialer Richtung einen keilförmig ausgebildeten Mantel aufweist, dessen Durchmesser mit wachsendem Abstand von dem mit Gewinde (18) ausgestatteten Spannelementende größer wird.

7. Verbindungseinrichtung nach einem der Ansprüche 1 bis 6, **gekennzeichnet durch** einen weiteren Bund (20), der im verspannten Zustand der Maschinenteile vorzugsweise 5mm bis 30mm zur Gewindeverbindung zwischen einem Maschinenteil und dem Spannelementende beabstandet ist und/oder dass in einem Abstand von vorzugsweise 5mm bis 30mm zum Bolzen- oder Schraubenkopf (17) ein zusätzlicher Bund (21) angeordnet ist, wobei vorzugsweise mindestens ein Bund (19, 20, 21) aus Polyurethan, weiterhin vorzugsweise mit einer Härte von 85 bis 95 Shore A besteht.

8. Verbindungseinrichtung nach einem der Ansprüche 1 bis 7, **dadurch gekennzeichnet, dass** das Gewinde (18) des Spannelements zur Verringerung der Kerbwirkung als Rundgewinde ausgebildet ist.

9. Verbindungseinrichtung nach einem der Ansprüche 1 bis 8, **dadurch gekennzeichnet, dass** der Durchmesser der Bohrung der miteinander verbundenen Maschinenteile sprungweise in Einführrichtung des Spannelements abnimmt, vorzugsweise im Bereich einer Trennfuge und dass ein Bund in diesem Bereich liegt, so dass die verbundenen Maschinenteile zusätzlich gegen Verdrehen gesichert werden.

10. Verbindungseinrichtung nach einem der Ansprüche 1 bis 9, **dadurch gekennzeichnet, dass** in dem Aufnahmegewinde eines Maschinenteils ein Gewindeeinsatz in Form einer Wendel, vorzugsweise aus einem Draht mit im wesentlichen rhombischem Querschnitt eingesetzt ist, in den das Spannelementgewinde eingreift, wobei vorzugsweise die Gewindeflächen, insbesondere die Aufnahmegewindeflächen, und/oder die Flächen des Gewindeeinsatzes beschichtet sind, weiterhin vorzugsweise mit einer Aluminium- oder Silberlegierung.

11. Verbindungseinrichtung nach einem der Ansprüche 1 bis 10, **dadurch gekennzeichnet, dass** das Aufnahmegewinde eines Maschinenteils bei eingebrachtem Spannelement zu beiden Seiten über das Spannelementgewinde herausragt und/oder dass zur Zentrierung des Spannelements eine Unterlegscheibe (31) mit einem konischen Innenmantelbereich (32) zum Kopf des Spannelements hin verwendet wird, dessen Konuswinkel gleich groß dem Konuswinkel der schrägen Außenmantelfläche (22) am unteren Ende des Spannelementkopfes (17) ist.

12. Verbindungseinrichtung nach einem der Ansprüche 1 bis 11, **dadurch gekennzeichnet, dass** zur Zentrierung der Unterlegscheibe (31) diese auf der dem Maschinenteil (10) zugewandten Seite einen ringförmigen Ansatz (33) aufweist, dessen Außendurchmesser dem Innendurchmesser der Bohrung (14) entspricht und/oder dass zur Zentrierung der Unterlegscheibe (31) das Maschinenteil (10) an der Bohrung (14) eine Ausnehmung (34) aufweist, deren Innendurchmesser dem Außenradius der Unterlegscheibe entspricht und die Unterlegscheibe somit weitgehend spielfrei in die Ausnehmung (34) eingelassen werden kann und/oder dass zur Zentrierung der Unterlegscheibe (31) die Außenmantelfläche der Unterlegscheibe zum Maschinenteil (10) hin einen konischen Bereich aufweist, dessen Konuswinkel gleich dem Konuswinkel einer schrägen Aufnahmefläche an der Bohrung (14) des Maschinenteils ist.

## Claims

1. Connecting arrangement on a percussion mechanism, comprising at least two machine parts (10, 11, 12) which bear against one another and which each have a bore (14, 15), comprising a clamping element (16), in particular a clamping bolt or a clamping screw, which is completely accommodated in the bore (14, 15) except for a screw head (17) and which is screwed at one end to one machine part (11) via a threaded connection (13, 18), and comprising at least one retaining or supporting part which is formed as a collar, is made of vibration-damping material, is arranged between the ends of the clamping element and is in contact under compressive stress in the annular region between the bore (15) and the outer lateral surface of the clamping element, **characterized in that** the collar (19, 27) has at least one outer lateral surface region (23, 29) in the longitudinal axial direction, said outer lateral surface region (23, 29) being at a distance from the bore, wherein either the collar has a plurality of spaced-apart annular, helical or longitudinally axially running projections (24, 26), the outer lateral surfaces of which bear against the lateral bore surface (25) under compressive stress or the collar (27) has an at least partly tapered outer lateral surface (28, 29) which has an oversize relative to the bore (25) in the relieved state only in a longitudinal axial section (28).

2. Connecting arrangement according to Claim 1, **characterized in that** the projections have, relative to the bore diameter, an oversize of 0.2 mm to 1.5 mm, preferably of 0.5 mm to 1 mm, and **in that** the outside diameter of lateral surfaces of the collar that are adjacent to the projections (24, 26) is 0.2 mm to 1,5 mm smaller, preferably 0.5 mm to 1 mm smaller, than the bore diameter.

3. Connecting arrangement according to Claim 1, **characterized in that** the collar (19) has a width (i.e. wall thickness) of 3 mm to 8 mm, preferably of 4 mm to 6 mm.

4. Connecting arrangement according to one of Claims 1 to 3, **characterized in that,** due to the axial position of the collar on the clamping element (16) and/or due to different bore diameters, during fitting of the clamping element (16) the compressive stress produced by the collar does not become effective until the clamping element (16) engages in the thread (13) of the accommodating bore of a machine part (11).

5. Connecting arrangement according to one of Claims 2 to 4, **characterized in that** the projections (24, 26) or the surface section (28), in contact under compressive stress in the bore, of the collar (19, 17) have or has an outer lateral surface profile of round or polygonal cross section, and/or in that the clamping element (16) has an external thread (18) at one end and a screw head (17) at the other end.

6. Connecting arrangement according to one of Claims 3 to 5, **characterized in that** the collar (27) has a wedge-shaped lateral surface in the longitudinal axial direction, the diameter of which becomes larger with increasing distance from the clamping element end provided with thread (18).

7. Connecting arrangement according to one of Claims 1 to 6, **characterized by** a further collar (20) which, in the restrained state of the machine parts, is at a distance of preferably 5 mm to 30 mm from the threaded connection between a machine part and the clamping element end, and/or in that an additional collar (21) is arranged at a distance of preferably 5 mm to 30 mm from the bolt head or screw head (17), wherein preferably at least one collar (19, 20, 21) is made of polyurethane, more preferably with a hardness of 85 to 95 Shore A.

8. Connecting arrangement according to one of Claims 1 to 7, **characterized in that** the thread (18) of the clamping element is designed as a round thread for reducing the notch effect.

9. Connecting arrangement according to one of Claims 1 to 8, **characterized in that** the diameter of the bore of the machine parts connected to one another decreases abruptly in the insertion direction of the clamping element, preferably in the region of a parting line, and **in that** a collar lies in this region, such that the connected machine parts are additionally locked against rotation.

10. Connecting arrangement according to one of Claims 1 to 9, **characterized in that** a threaded insert in the form of a helix, preferably consisting of a wire having a substantially rhombic cross section, is inserted in the accommodating thread of a machine part, in which threaded insert the clamping element thread engages, wherein the thread surfaces, in particular the accommodating thread surfaces and/or the surfaces of the threaded insert, are coated, more preferably with an aluminium or silver alloy.

11. Connecting arrangement according to one of Claims 1 to 10, **characterized in that** the accommodating thread of a machine part, when the clamping element is inserted, projects on both sides beyond the clamping element thread, and/or **in that** a washer (31) having a tapered inner lateral surface region (32) towards the head of the clamping element is used for centring the clamping element, the taper angle of said region (32) being the same size as the taper angle of the sloping outer lateral surface (22) on the lower end of the clamping element head (17).

12. Connecting arrangement according to one of Claims 1 to 11, **characterized in that**, to centre the washer (31), said washer (31) has on the side facing the machine part (10) an annular extension (33), the outside diameter of which corresponds to the inside diameter of the bore (14), and/or in that, to centre the washer (31), the machine part (10) has at the bore (14) a recess (34), the inside diameter of which corresponds to the outer radius of the washer, and the washer can therefore be let into the recess (34) largely free of play, and/or **in that**, to centre the washer (31), the outer lateral surface of the washer has a tapered region towards the machine part (10), the taper angle of which tapered region is equal to the taper angle of a sloping accommodating surface on the bore (14) of the machine part.

## Revendications

1. Dispositif de raccordement sur un mécanisme à percussion avec au moins deux éléments de machine (10, 11, 12) juxtaposés présentant chacun un perçage (14, 15), avec un élément de serrage (16), en particulier un boulon de serrage ou une vis de serrage, qui, à l'exception d'une tête de vis (17), est reçu complètement dans ledit perçage (14, 15) et vissé, à une extrémité, par l'intermédiaire d'un raccordement fileté (13, 18) avec un élément de machine (11), ainsi qu'avec au moins un élément de maintien ou de support en une matière amortissant les vibrations qui est réalisé sous forme d'une collerette (19), est disposé entre les extrémités de l'élément de serrage et s'applique, sous contrainte de compression, dans la zone annulaire entre ledit perçage (15) et la surface latérale extérieure de l'élément de serrage,
**caractérisé par le fait que**
ladite collerette (19, 27) présente, dans le sens de l'axe longitudinal, au moins une zone de surface latérale extérieure (23, 29) qui est espacée du perçage, soit ladite collerette présentant plusieurs projections (24, 26) annulaires, hélicoïdales ou longitudinales axiales espacées dont les surfaces latérales extérieures s'appliquent, sous contrainte de compression, sur la surface latérale de perçage (25) soit ladite collerette (27) présentant une surface latérale extérieure (28, 29) réalisée au moins en partie de façon conique qui, en état détendu, ne présente une surmesure par rapport au perçage (25) que dans une zone partielle (28) longitudinale axiale.

2. Dispositif de raccordement selon la revendication 1, **caractérisé par le fait que** les projections présentent une surmesure par rapport au diamètre du perçage qui est comprise entre 0,2 mm et 1,5 mm, de préférence entre 0,5 mm et 1 mm et que les surfaces latérales de la collerette qui sont voisines des projections (24, 26) présentent un diamètre extérieur qui est de 0,2 mm à 1,5 mm, de préférence de 0,5 mm à 1 mm plus petit que le diamètre du perçage.

3. Dispositif de raccordement selon la revendication 1, **caractérisé par le fait que** ladite collerette (19) présente une largeur (c'est-à-dire épaisseur de paroi) comprise dans la gamme de 3 mm à 8 mm, de préférence de 4 mm à 6 mm.

4. Dispositif de raccordement selon l'une quelconque des revendications 1 à 3, **caractérisé par le fait que**, dû à la position axiale de la collerette sur ledit élément de serrage (16) et/ou à des diamètres de perçage différents, la contrainte de compression générée par la collerette ne devient efficace, lors d'un montage de l'élément de serrage (16), que lorsque ledit élément de serrage (16) s'engrène dans le taraudage (13) du perçage de logement d'un élément de machine (11).

5. Dispositif de raccordement selon l'une quelconque des revendications 2 à 4, **caractérisé par le fait que** lesdites projections (24, 26) ou la face partielle (28) de la collerette (19, 27) qui s'applique, sous contrainte de compression, dans le perçage présente(nt) un profil de surface latérale extérieure rond ou polygonal en coupe transversale et/ou que ledit élément de serrage (16) présente un filetage extérieur (18) à une extrémité et une tête de vis (17) à l'extrémité opposée.

6. Dispositif de raccordement selon l'une quelconque des revendications 3 à 5, **caractérisé par le fait que** ladite collerette (27) présente, dans la direction de l'axe longitudinal, une surface latérale en forme de coin dont le diamètre augmente plus la distance par rapport à l'extrémité filetée (18) de l'élément de serrage s'accroît.

7. Dispositif de raccordement selon l'une quelconque des revendications 1 à 6, **caractérisé par** une autre collerette (20) qui, en état serré des éléments de machine, est espacée de 5 mm à 30 mm du raccordement fileté entre un élément de machine et l'extrémité de l'élément de serrage et/ou qu'une collerette supplémentaire (21) est disposée à une distance comprise, de préférence, entre 5 mm et 30 mm de la tête de boulon ou de vis (17), de préférence au moins une collerette (19, 20, 21) étant réalisée en polyuréthane, en outre de préférence avec une dureté comprise dans la gamme de 85 à 95 Shore A.

8. Dispositif de raccordement selon l'une quelconque des revendications 1 à 7, **caractérisé par le fait que** le filetage (18) de l'élément de serrage est réalisé en tant que filetage arrondi pour réduire l'effet d'entaille.

9. Dispositif de raccordement selon l'une quelconque des revendications 1 à 8, **caractérisé par le fait que** le diamètre du perçage des éléments de machine reliés entre eux diminue par palier dans la direction d'introduction de l'élément de serrage, de préférence au niveau d'un joint de séparation, et qu'une collerette est située dans cette zone de sorte que les éléments de machine reliés sont en sus bloqués en rotation.

10. Dispositif de raccordement selon l'une quelconque des revendications 1 à 9, **caractérisé par le fait que** dans le taraudage de réception d'un élément de machine est mis en place un insert fileté sous forme d'une hélice, de préférence réalisée à partir d'un fil ayant une section pour l'essentiel rhomboïdale, dans lequel s'engrène le filetage de l'élément de serrage, de préférence les surfaces filetées, en particulier les surfaces du taraudage de réception, et/ou les surfaces de l'insert fileté étant revêtues, en outre de préférence d'un alliage d'aluminium ou d'argent.

11. Dispositif de raccordement selon l'une quelconque des revendications 1 à 10, **caractérisé par le fait que** le taraudage de réception d'un élément de machine, lorsque ledit élément de serrage est inséré, fait saillie de part et d'autre du filetage de l'élément de serrage, et/ou que, pour centrer ledit élément de serrage, on utilise une rondelle (31) ayant une zone de surface latérale intérieure conique (32) en direction de la tête de l'élément de serrage dont l'angle de cône est égal a l'angle de cône de la surface latérale extérieure oblique (22) à l'extrémité inférieure de la tête (17) de l'élément de serrage.

12. Dispositif de raccordement selon l'une quelconque des revendications 1 à 11, **caractérisé par le fait que**, pour centrer ladite rondelle (31), cette dernière présente un épaulement annulaire (33) du côté montrant en direction de l'élément de machine (10), dont le diamètre extérieur correspond au diamètre intérieur du perçage (14), et/ou que, pour centrer ladite rondelle (31), l'élément de machine (10) présente un évidement (34) sur ledit perçage (14), dont le diamètre intérieur correspond au rayon extérieur de la rondelle et que, ainsi, la rondelle peut être placée, dans une large mesure sans jeu, dans ledit évidement (34), et/ou que, pour centrer ladite rondelle (31), la surface latérale extérieure de la rondelle présente une zone conique en direction de l'élément de machine (10), dont l'angle de cône est égal à l'angle de cône d'une surface oblique de réception sur le perçage (14) de l'élément de machine.
